# FASCICULE DE BREVET EUROPEEN

(11) **EP 0 715 086 B1**
(45) Date de publication et mention de la délivrance du brevet: **30.06.1999**
(21) Numéro de dépôt: 95118475.3
(22) Date de dépôt: 23.11.1995
(51) Int. Cl.: F16B 29/00, B60S 1/04, F16F 1/373

(54) **Dispositif pour la fixation d'un élément sur la caisse d'un véhicule automobile**
Anordnung zur Befestigung eines Elementes an einer Kraftfahrzeugkarosserie
Device for fastening an element on a body of a motor vehicle

(30) Priorité: 30.11.1994 FR 9414493
(43) Date de publication de la demande: 05.06.1996
(73) Titulaire: VALEO SYSTEMES D'ESSUYAGE, 78321 La Verrière (FR)
(72) Inventeur: Gaignard, Bruno, F-86100 Chatellerault (FR); Monmaneix, Rémy, F-27570 Le Mesnil d'Acon (FR); Roumegoux, Jean-Louis, F-75116 Paris (FR)
(74) Mandataire: Gamonal, Didier

(56) Documents cités:
- FR-A- 1 368 673
- US-A- 3 013 643
- US-A- 3 489 312
- US-A- 3 675 881

## Description

La présente invention concerne un dispositif pour la fixation d'un élément sur la caisse d'un véhicule automobile (US-A-3 489 312).

L'invention concerne notamment un dispositif pour la fixation d'un élément appartenant à un mécanisme d'essuie-glace tel que par exemple une platine de support du mécanisme.

L'invention concerne par exemple un dispositif de fixation du type comportant un ensemble vis-écrou dont la tige filetée traverse un trou formé dans une tôle avec interposition d'un manchon d'amortissement qui, en position serrée du dispositif, est comprimé axialement entre une surface radiale annulaire d'appui formée sur le corps de la tige filetée et une face annulaire de serrage de l'écrou.

Selon un agencement le plus couramment utilisé, le manchon d'amortissement est un manchon cylindrique tubulaire qui lors du serrage est comprimé axialement par les surfaces annulaires correspondantes de la vis et de l'écrou qui le compriment de manière à augmenter son diamètre au niveau du trou dans la tôle et de manière à venir enserrer axialement les faces opposées de la tôle entre les parties opposées et écrasées du manchon tubulaire en assurant ainsi une fixation "élastique" sur la tôle.

Ces conceptions connues ne permettent pas de maîtriser de manière précise la conformation du manchon d'amortissement en position serrée.

Cette absence de maîtrise de l'effort de serrage peut aboutir soit à un serrage excessif qui empêche au manchon d'amortissement en matériau élastomère ou en caoutchouc d'assurer son rôle d'amortisseur, soit à un serrage insuffisant qui assure un positionnement insuffisamment précis de l'élément par rapport à la caisse du véhicule.

La présente invention a pour but de proposer une nouvelle conception d'un dispositif de fixation du type mentionné précédemment qui permet de remédier à ces inconvénients.

Dans ce but, l'invention propose un dispositif de fixation selon la revendication 1. Selon un mode particulier de réalisation une entretoise de serrage est agencée axialement entre la surface radiale d'appui et la face annulaire de serrage de l'écrou.

Selon d'autres modes particuliers de l'invention :
- l'entretoise est réalisée sous forme d'une douille coaxiale au manchon ;
- la douille est agencée à l'intérieur du manchon;
- la surface radiale d'appui est une collerette annulaire plane qui prend appui contre un épaulement radial de la tige filetée ;
- la collerette est réalisée en une seule pièce avec la douille ;
- la douille prend appui axialement contre ladite surface radiale d'appui de la collerette ;
- une rondelle de serrage est interposée entre la face annulaire de serrage de l'écrou et le manchon d'amortissement ;
- la face de la rondelle de serrage tournée vers le manchon d'amortissement comporte un profil chanfreiné en relief qui guide la déformation du manchon d'amortissement lors du serrage axial ;
- en position serrée, l'entretoise prend appui axialement contre une portion en vis-à-vis de la rondelle de serrage ;
- en position non serrée, les diamètres extérieurs de l'écrou et du manchon d'amortissement sont inférieurs au diamètre du trou ;
- le diamètre extérieur de la rondelle de serrage est inférieur au diamètre du trou ;
- la douille est réalisée venue de matière en une seule pièce avec l'écrou ;
- l'écrou est noyé dans le manchon d'amortissement.

Les caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée des principaux composants d'un premier mode de réalisation d'un dispositif de fixation selon l'invention dont certains sont illustrés en arrachement partiel ;
- la figure 2 est une vue en position assemblée, mais non serrée, des composants illustrés sur la figure 1 ; et
- la figure 3 est une vue similaire à celle de la figure 2 sur laquelle les composants sont illustrés en position serrée ;
- la figure 4 est une vue similaire à celle de la figure 3 qui illustre une variante de réalisation comportant une coupelle de protection du manchon d'amortissement ;
- les figures 5 et 6 sont des vues similaires à celles des figures 2 et 3 qui illustrent une variante de réalisation de l'écrou de serrage axial ;
- la figure 7 est une vue en section axiale d'un autre mode de réalisation d'un dispositif de fixation selon l'état de la technique, en position non serrée ;
- la figure 8 est une vue en section axiale similaire à celle de la figure 7 sur laquelle le dispositif de fixation est illustré en position serrée ;
- la figure 9 est une vue en perspective du manchon d'amortissement intégré au dispositif de fixation illustré aux figures 8 et 9 ;
- les figures 10 et 11 sont des vues similaires à celles des figures 8 et 9 qui illustrent le dispositif de fixation modifié conformément aux enseignements de l'invention afin qu'il comporte une entretoise de serrage axial ;
- la figure 12 est une vue en perspective à plus grande échelle qui illustre une variante de réalisation de l'entretoise intégrée au dispositif de fixation des figures 10 et 11 dans laquelle l'entretoise est réalisée venue de matière en une seule pièce avec une collerette d'appui ;
- les figures 13 et 14 sont des vues similaires à celles des figures 10 et 11 qui illustrent une variante de réalisation dans laquelle l'entretoise est réalisée en une seule pièce avec l'écrou de serrage noyé dans le manchon d'amortissement ; et
- la figure 15 est une vue en perspective à plus grande échelle de l'écrou de serrage avec son entretoise réalisée en une seule pièce.

Dans la description qui va suivre, des chiffres de référence identiques seront utilisés pour désigner des composants identiques ou similaires tout au long de la description.

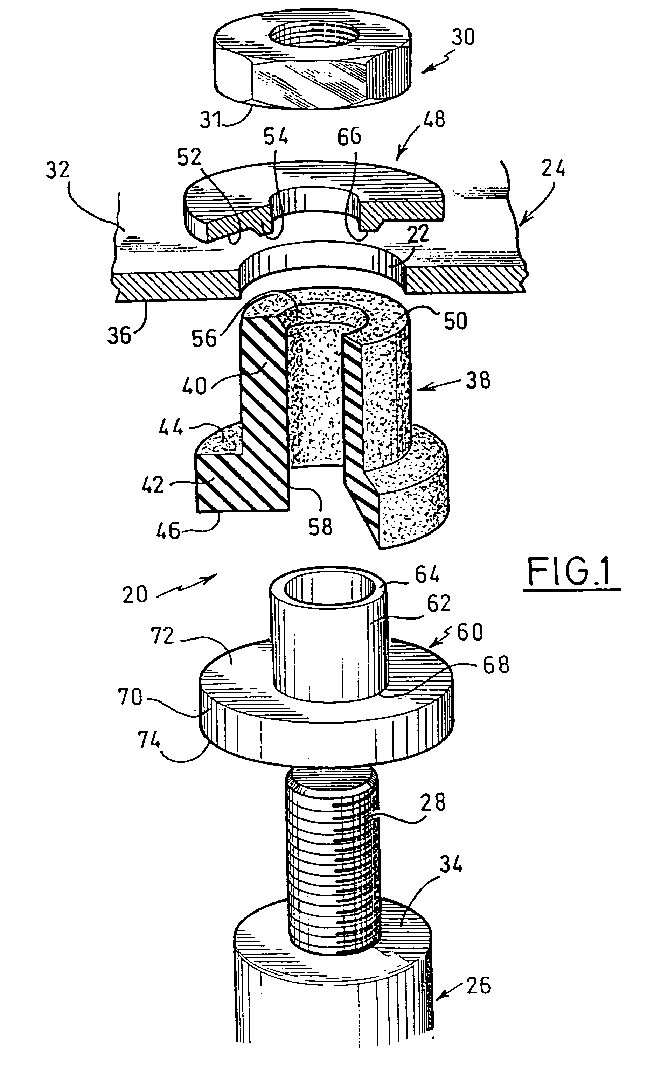

On a représenté aux figures 1 à 3 un dispositif de fixation 20 destiné notamment à permettre la fixation "élastique" d'un élément (non représenté) dans un trou circulaire 22 formé dans une tôle 24.

L'élément destiné à être fixé sur la tôle 24 est par exemple relié au corps 26 d'une vis de fixation dont la tige filetée 28 est prévue pour traverser le trou 22 et coopérer avec un écrou hexagonal de serrage 30.

L'écrou 30 est situé au-dessus de la face supérieure 32 de la tôle 24 tandis que la tige filetée 28 délimite avec le corps 26 un épaulement radial annulaire d'appui 34 qui s'étend en regard de la face inférieure 36 de la tôle 24.

Un manchon d'amortissement 38 en matériau élastomère ou en caoutchouc est interposé entre la tige filetée 28 et le trou 22.

Le manchon 38 est constitué par une jupe cylindrique annulaire 40 et par un collet radial 42 dont la face supérieure 44 est prévue pour venir en appui contre la face inférieure 36 de la tôle 34 et dont la face inférieure 46 s'étend en regard de l'épaulement radial 34 de la vis 26, 28.

Une rondelle de serrage 48 est interposée entre la face annulaire inférieure de serrage 31 de l'écrou 30 et la face radiale annulaire d'extrémité 50 de la jupe 40 du manchon d'amortissement 38.

La face inférieure 52 de la rondelle 48 présente un chanfrein en relief 54 qui est prévu pour coopérer avec un chanfrein correspondant 56 formé au voisinage de l'extrémité supérieure libre du trou cylindrique interne 58 du manchon d'amortissement 38.

Conformément aux enseignements de l'invention, une entretoise de serrage axial 60 est interposée entre l'épaulement radial 34 et la face annulaire de serrage 31 de l'écrou 30, à l'intérieur du manchon 38.

La douille 60 comporte un corps en forme de douille cylindrique tubulaire proprement dite 62 dont le bord radial annulaire supérieur 64 est prévu pour venir coopérer avec la face annulaire inférieure 66 du chanfrein 54 de la rondelle 48.

A son extrémité inférieure 68, la douille 60 se prolonge par une collerette radiale extérieure 70 dont la face supérieure annulaire 72 est prévue pour coopérer avec la face annulaire inférieure 46 du manchon d'amortissement 38 et dont la face annulaire inférieure 74 est prévue pour coopérer avec l'épaulement radial 34 de la vis 26, 28.

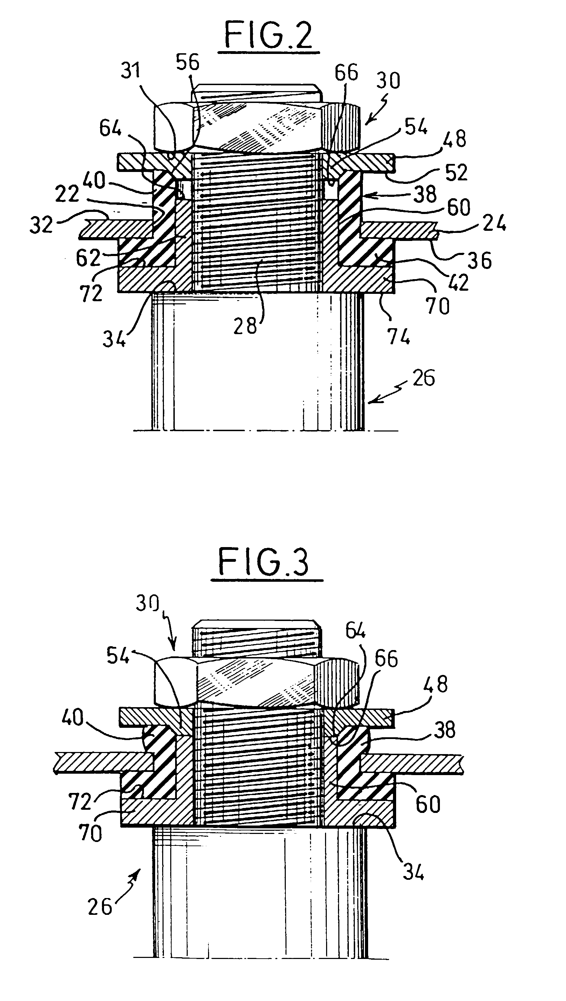

Le diamètre extérieur de la jupe 40 du manchon d'amortissement 38 est, avant serrage axial et comme cela est illustré sur la figure 2, légèrement inférieur à celui du trou 22 de manière à permettre la mise en place de la vis équipée de l'entretoise 60 et du manchon d'amortissement 38 verticalement de bas en haut à travers le trou 22.

L'assemblage se poursuit en mettant en place la rondelle de serrage 48 et l'écrou 30 sur l'extrémité libre de la tige filetée 28 de la vis.

Lors du serrage axial, la rotation de l'écrou 30 provoque le déplacement axial progressif de sa face annulaire inférieure de serrage 31 et de la rondelle 48 axialement vers le bas en considérant la figure 2.

Ce déplacement provoque la compression axiale progressive du manchon d'amortissement 38 dont la jupe cylindrique 40 se déforme pour venir épouser en partie la face supérieure 32 de la tôle 24.

La position de serrage axial maximum est déterminée par la venue en butée de la face radiale annulaire d'extrémité 64 de l'entretoise 60 contre la face annulaire inférieure 66 du chanfrein 54 de la rondelle de serrage 48.

Il est alors impossible de serrer axialement l'assemblage au-delà de cette position, la compression axiale du manchon d'amortissement 38 étant ainsi parfaitement maîtrisée grâce à la conception selon l'invention.

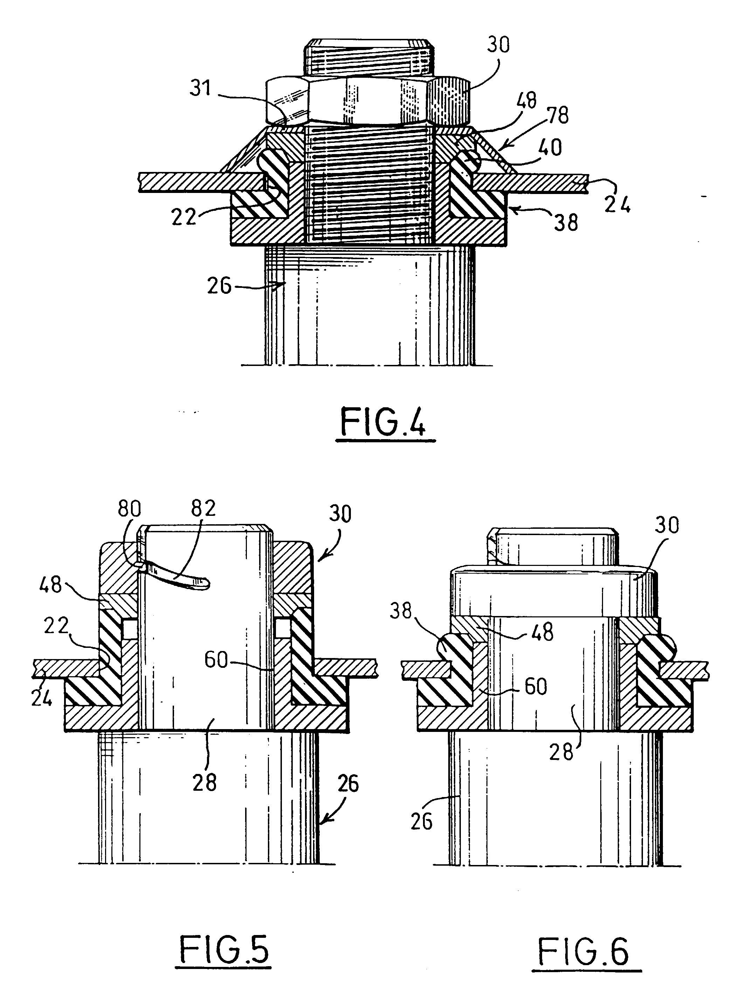

Dans la variante de réalisation illustrée à la figure 4, une coupelle 78 de protection de la partie supérieure comprimée de la jupe cylindrique 40 de la douille d'amortissement 38 est agencée entre la rondelle de serrage 48 et la face annulaire inférieure de serrage 31 de l'écrou 30.

Dans les modes de réalisation illustrés aux figures 1 à 4, l'écrou 30 est un écrou classique de forme hexagonale.

Dans la variante de réalisation illustrée aux figures 5 et 6, l'écrou 30 est un écrou cylindrique de serrage du type à baïonnette comportant un ergot 80 reçu dans une rainure hélicoïdale 82 de la tige 28 du corps de la vis 26.

Le diamètre extérieur de l'écrou cylindrique 30 et de la rondelle de serrage 48 sont inférieurs au diamètre intérieur du trou 22 de la tôle 24 de manière à permettre l'introduction axiale de l'ensemble des composants du dispositif de serrage de bas en haut en considérant la figure 5 dans le trou 22, l'opérateur n'ayant plus ensuite qu'à serrer l'écrou 30 en provoquant sa rotation pour assurer la fixation de l'ensemble avec compression axiale contrôlée du manchon d'amortissement 38 comme cela est illustré sur la figure 6.

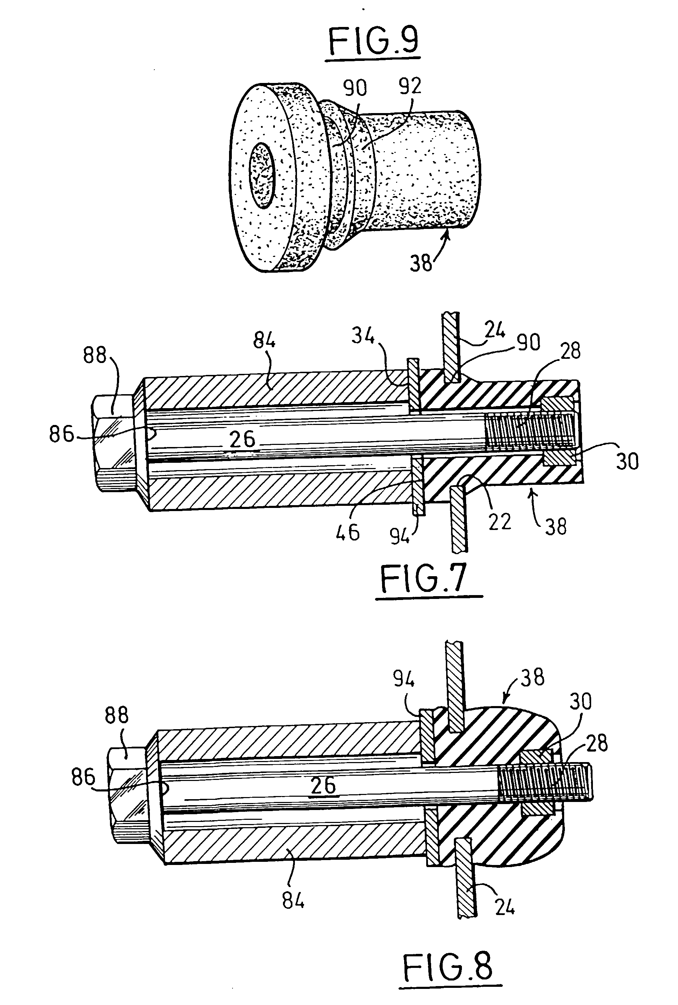

Le dispositif de fixation selon l'état de la technique illustré aux figures 7 à 8 diffère du principe exposé précédemment en ce que l'épaulement 34 n'est pas formé directement sur le corps 26 de la vis qui se termine par la tige filetée mais sur une virole 84 qui prend appui contre la face annulaire 86 de la tête à six pans 88 de la vis.

Le manchon d'amortissement 38 comporte une gorge 90 de dimension correspondante à celle du trou 22 de la tôle 24 et il comporte une partie chanfreinée 92 facilitant l'introduction à force de la tôle 24 dans la gorge 90.

L'écrou 30 est ici noyé à l'intérieur du manchon d'amortissement 38 et le serrage est obtenu par vissage du goujon 26, 28, 88 qui provoque, comme cela est illustré sur la figure 8, le déplacement axial de l'écrou 30 en direction de la surface radiale d'appui 34 provoquant la compression du manchon 38.

Une rondelle 94 peut être interposée entre la surface radiale d'appui 34 de la virole 84 et la face annulaire d'extrémité 46 du manchon 38 afin d'accroître la surface de portée et de serrage.

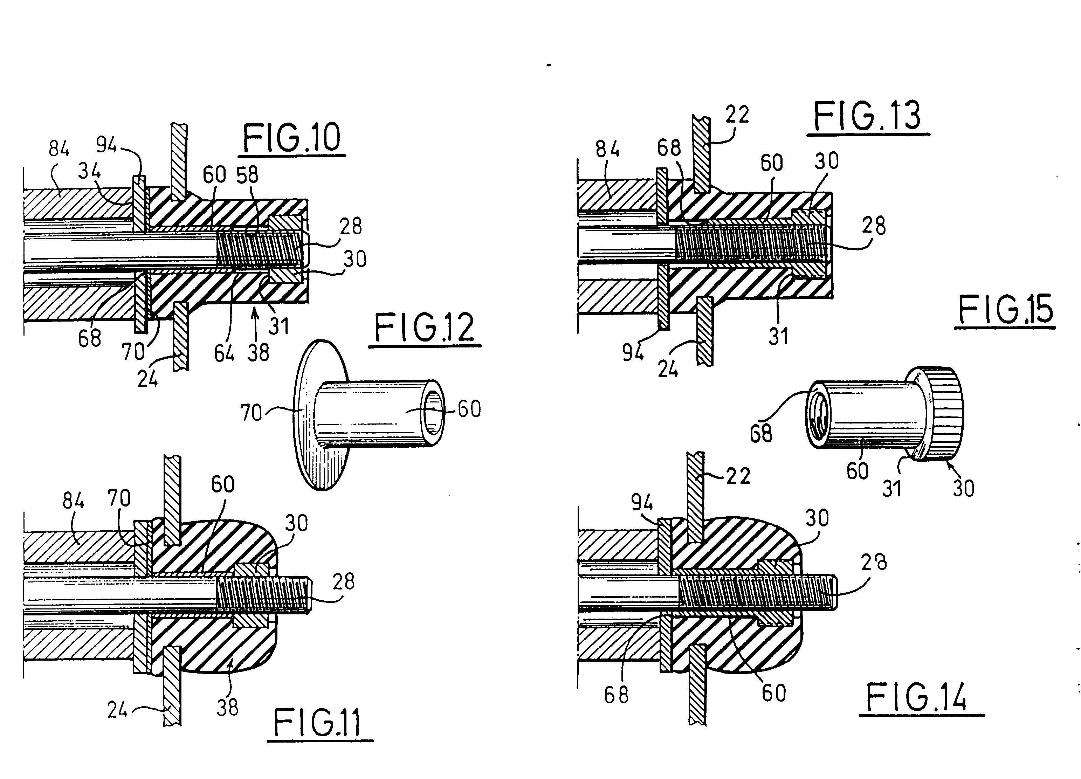

Conformément à l'invention, et comme cela est illustré aux figures 10 à 11, une entretoise de serrage axial en forme de douille 60 est agencée à l'intérieur de l'alésage cylindrique 58 du manchon d'amortissement 38.

L'extrémité 68 de l'entretoise 60 prend appui contre une collerette en forme de rondelle 70 interposée entre la rondelle 94 et la surface radiale d'appui 34 de la virole 84 tandis que le bord annulaire d'extrémité 64 de la douille 60 est susceptible de venir coopérer avec la face radiale annulaire de serrage 31 de l'écrou noyé 30.

En position serrée, et comme cela est illustré sur la figure 11, la venue en butée de l'écrou 30 contre l'entretoise en forme de douille 60 permet de maîtriser parfaitement l'effort de compression axial du manchon d'amortissement 38 conformément aux enseignements de l'invention.

Dans la variante de réalisation illustrée sur la figure 12, la douille tubulaire 60 est réalisée venue de matière en une seule pièce avec la collerette 70.

Dans la variante de réalisation illustrée aux figures 13 à 15, l'entretoise en forme de douille tubulaire 60 est réalisée venue de matière avec l'écrou noyé 30 et elle s'étend axialement depuis la face radiale annulaire de serrage 31 de l'écrou en direction de la rondelle 94.

A la fin du serrage, le bord radial annulaire d'extrémité 68 de l'entretoise en forme de douille 60 vient en butée contre la face en vis-à-vis de la rondelle 94 comme cela est illustré sur la figure 14.

La présente invention peut être appliquée à titre non limitatif à la fixation d'un élément appartenant à un mécanisme d'essuie-glace sur la caisse d'un véhicule automobile.

## Revendications

1. Dispositif pour la fixation d'un élément appartenant à un mécanisme d'essuie-glace, sur la caisse (24) d'un véhicule automobile, du type comportant un ensemble vis-écrou (26, 28, 30) dont la tige filetée (28) traverse un trou (22) formé dans une tôle (24) avec interposition d'une douille d'amortissement (38) qui, en position serrée du dispositif, est comprimée axialement entre une surface radiale annulaire d'appui (34) formée sur le corps (26) de la tige filetée (28) et une face annulaire de serrage (31) de l'écrou (30), une rondelle de serrage (48) est interposée entre la face annulaire (31) de serrage de l'écrou (30) et le manchon d'amortissement (38, 50) et une entretoise de serrage (60, 62) étant agencée axialement entre la surface radiale d'appui (34) et la rondelle de serrage (48) de l'écrou (30), caractérisé en ce que la face (52) de la rondelle de serrage (48) tournée vers le manchon d'amortissement (38) comporte un profil chanfreiné en relief (54) qui guide la déformation du manchon d'amortissement (38) lors du serrage axial.

2. Dispositif selon la revendication 1, caractérisé en ce que, en position serrée, l'entretoise (60, 64) prend appui axialement contre une portion en vis-à-vis (66) de la rondelle de serrage (48, 54).

3. Dispositif selon la revendication 1, caractérisé en ce que l'entretoise (60) est réalisée sous forme d'une douille coaxiale au manchon d'amortissement (38).

4. Dispositif selon la revendication 3, caractérisé en ce que la douille (60) est agencée à l'intérieur du manchon d'amortissement (38).

5. Dispositif selon l'une des revendications 3 ou 4, caractérisé en ce que la surface radiale d'appui est une collerette annulaire (70) plane qui prend appui contre un épaulement radial (34) de la tige filetée.

6. Dispositif selon la revendication 5 prise en combinaison avec l'une des revendications 3 ou 4, caractérisé en ce que la collerette (70) est réalisée en une seule pièce avec la douille (60).

7. Dispositif selon la revendication 5 prise en combinaison avec l'une des revendications 3 ou 4, caractérisé en ce que la douille (60) prend appui axialement contre une surface radiale d'appui de la collerette (70).

8. Dispositif selon l'une quelconque des revendications précédentes, caractérisé en ce que, en position non serrée, les diamètres extérieurs de l'écrou (30) et du manchon d'amortissement (38) sont inférieurs au diamètre du trou (22).

9. Dispositif selon la revendication 8 prise en combinaison avec l'une quelconque des revendications 1 ou 2, caractérisé en ce que le diamètre extérieur de la rondelle de serrage (48) est inférieur au diamètre du trou (22).

10. Dispositif selon la revendication 4, caractérisé en ce que la douille (60) est réalisée venue de matière en une seule pièce avec l'écrou (30).

11. Dispositif selon la revendication 10, caractérisé en ce que l'écrou (30) est noyé dans le manchon d'amortissement (38).

## Patentansprüche

1. Anordnung zur Befestigung eines Elements, das zu einem Scheibenwischermechanismus gehört, an der Karosserie (24) eines Kraftfahrzeugs, umfassend eine Schrauben-Mutter-Einheit (26, 28, 30), deren Gewindeschaft (28) durch ein in einem Blech (24) ausgebildetes Loch (22) unter Einfügung einer Dämpfungshülse (38) hindurchgeht, die in der eingespannten Position der Anordnung axial zwischen einer am Körper (26) des Gewindeschafts (28) ausgebildeten ringförmigen radialen Auflagefläche (34) und einer ringförmigen Einspannfläche (31) der Mutter (30) zusammengedrückt wird, wobei eine Einspannscheibe (48) zwischen der ringförmigen Einspannfläche (31) der Mutter (30) und der Dämpfungsmuffe (38, 50) eingefügt ist und wobei ein Einspannzwischenstück (60, 62) axial zwischen der radialen Auflagefläche (34) und der Einspannscheibe (48) der Mutter (30) angeordnet ist, **dadurch gekennzeichnet**, daß die zur Dämpfungsmuffe (38) gerichtete Fläche (52) der Einspannscheibe (48) ein erhabenes abgeschrägtes Profil (54) umfaßt, das bei der axialen Einspannung die Verformung der Dämpfungsmuffe (38) führt.

2. Anordnung nach Anspruch 1 , **dadurch gekennzeichnet,** daß das Zwischenstück (60, 64) in der eingespannten Position axial an einem gegenüberliegenden Abschnitt (66) der Einspannscheibe (48, 54) zur Anlage kommt.

3. Anordnung nach Anspruch 1, **dadurch gekennzeichnet**, daß das Zwischenstück (60) in Form einer zur Dämpfungsmuffe (38) koaxialen Hülse ausgeführt ist.

4. Anordnung nach Anspruch 3 , **dadurch gekennzeichnet**, daß die Hülse (60) im Innern der Dämpfungsmuffe (38) angeordnet ist.

5. Anordnung nach einem der Ansprüche 3 oder 4, **dadurch gekennzeichnet**, daß die radiale Auflagefläche ein ebener ringförmiger Kragen (70) ist, der an einer radialen Schulter (34) des Gewindeschafts zur Anlage kommt.

6. Anordnung nach Anspruch 5 in Kombination mit einem der Ansprüche 3 oder 4, **dadurch gekennzeichnet**, daß der Kragen (70) einstückig mit der Hülse (60) ausgeführt ist.

7. Anordnung nach Anspruch 5 in Kombination mit einem der Ansprüche 3 oder 4, **dadurch gekennzeichnet**, daß die Hülse (60) axial an einer radialen Auflagefläche des Kragens (70) zur Anlage kommt.

8. Anordnung nach einem der vorangehenden Ansprüche, **dadurch gekennzeichnet**, daß in der nicht eingespannten Position die Außendurchmesser der Mutter (30) und der Dämpfungsmuffe (38) kleiner als der Durchmesser des Loches (22) sind.

9. Anordnung nach Anspruch 8 in Kombination mit einem der Ansprüche 1 oder 2, **dadurch gekennzeichnet**, daß der Außendurchmesser der Einspannscheibe (48) kleiner als der Durchmesser des Loches (22) ist.

10. Anordnung nach Anspruch 4 , **dadurch gekennzeichnet**, daß die Hülse (60) einstükkig mit der Mutter (30) ausgeführt ist.

11. Anordnung nach Anspruch 10, **dadurch gekennzeichnet,** daß die Mutter (30) in die Dämpfungsmuffe (38) eingelassen ist.

## Claims

1. A device for fastening an element of a screen wiper on the body (24) of a motor vehicle, of the type comprising a bolt and nut assembly (26, 28, 30), the threaded bolt shank (28) of which passes through a hole (22) formed in a metal plate element (24) with a damping sleeve (38) being interposed, the damping sleeve being, when the device is in a tightened condition, compressed axially between an annular radial thrust surface (34) formed on the body (26) of the threaded bolt (28), and an annular tightening face (31) of the nut (30), a gripping washer (38) being interposed between the annular tightening face (31) of the nut (30) and the damping sleeve (38, 50), with a tightening spacer (60, 62) being arranged axially between the radial thrust surface (34) and the tightening washer (48) for the nut (30), characterised in that the face (52) of the tightening washer (48) that faces towards the damping sleeve (38) includes a chamfered profile (54) formed in relief thereon, which guides the deformation of the damping sleeve (38) during the axial tightening operation.

2. A device according to Claim 1, characterised in that, in the tightened position, the spacer (60, 64) is in axial engagement against a portion (66) of the tightening washer (48, 54) in facing relationship with it.

3. A device according to Claim 1, characterised in that the spacer (60) is made in the form of a sleeve coaxial with the damping sleeve (38).

4. A device according to Claim 3, characterised in that the spacer sleeve (60) is arranged inside the damping sleeve (38).

5. A device according to Claim 3 or Claim 4, characterised in that the radial thrust surface is a flat annular collar portion (70) which bears against a radial shoulder (34) of the threaded bolt.

6. A device according to Claim 5 taken in combination with Claim 3 or Claim 4, characterised in that the collar portion (70) is made integrally with the spacer sleeve (60).

7. A device according to Claim 5 taken in combination with Claim 3 or Claim 4, characterised in that the spacer sleeve (60) bears axially against a radial thrust surface of the collar portion (70).

8. A device according to any one of the preceding Claims, characterised in that, in a non-tightened condition, the outside diameters of the nut (30) and the damping sleeve (38) are smaller than the diameter of the hole (22).

9. A device according to Claim 8 taken in combination with either Claim 1 or Claim 2, characterised in that the outer diameter of the tightening washer (48) is smaller than the diameter of the hole (22).

10. A device according to Claim 4, characterised in that the spacer sleeve (60) is formed integrally as a single component with the nut (30).

11. A device according to Claim 10, characterised in that the nut (30) is encapsulated within the damping sleeve (38).
